# EUROPEAN PATENT SPECIFICATION

(11) **EP 3 501 348 B1**
(45) Date of publication and mention of the grant of the patent: **30.09.2020**
(21) Application number: 17840692.2
(22) Date of filing: 15.08.2017
(51) Int. Cl.: A47J 31/44, A47J 31/36

(54) **STRUCTURE-IMPROVED PACKAGE FEEDING AND REMOVING MECHANISM FOR BEVERAGE EXTRACTION DEVICE**
STRUKTURVERBESSERTER VERPACKUNGSZUFÜHR- UND -ENTFERNUNGSMECHANISMUS FÜR GETRÄNKEEXTRAKTIONSVORRICHTUNG
MÉCANISME D'ALIMENTATION ET DE RETRAIT D'EMBALLAGE À STRUCTURE AMÉLIORÉE POUR DISPOSITIF D'EXTRACTION DE BOISSON

(30) Priority: 19.08.2016 CN 201610692416
(43) Date of publication of application: 26.06.2019
(73) Proprietor: Ningbo Quanjing Electric Technology Co., Ltd., Cixi, Zhejiang 315324 (CN)
(72) Inventor: JING, Yudong, Zhejiang 315324 (CN); XU, Pingfu, Zhejiang 315324 (CN)
(74) Representative: Köllner, Malte
(86) International application number: PCT/CN2017/000530
(87) International publication number: WO 2018/032714

(56) References cited:
- CN-A- 103 876 633
- CN-A- 103 876 633
- CN-A- 106 136 915
- CN-A- 106 136 915
- CN-A- 106 264 156
- CN-A- 106 264 156
- CN-U- 202 426 301
- CN-U- 202 426 301
- CN-U- 203 802 284
- CN-U- 203 802 284
- CN-U- 206 342 351
- CN-U- 206 342 351
- US-A1- 2010 258 009
- US-A1- 2010 258 009

## Description

### Field of the Invention

The present invention relates to an improved capsule delivery and rejection mechanism for a beverage extraction device, and the beverage extraction device mainly refers to a coffeemaker.

### Description of the Prior Art

As one type of beverage extraction devices, the existing coffeemakers generally have a function of automatic capsule rejection for ease of operation. Two Chinese Utility Model Patents CN201044719Y (Patent No.: ZL200720110811.2) entitled Automatic Rejection Mechanism for Coffee Capsule in Coffeemaker and CN202619402U (Patent No.: ZL201220211428.7) entitled Automatic Capsule Rejection Mechanism for Beverage Preparation Device have disclosed such capsule delivery and rejection mechanism for a coffeemaker.

In the aforementioned two improved patents, two groups of guiding grooves for guiding the front shaft and the rear shaft of the jaws are disposed on the housing, the jaws move forward along with the second frame during the whole capsule delivery process, and there is no idle stroke between the jaws and the second frame. Therefore, in order to completely deliver a coffee capsule into the chamber and to ensure that the guiding grooves can guide the jaws to open and close according to the requirement of capsule rejection, it is necessary to dispose a large overall length for the guiding grooves. The guiding grooves include a straight rear groove, a straight front groove, a curved middle groove and a curved front groove. The straight front groove is in front of the straight rear groove and inclined outward. The curved middle groove is on the outer side of the straight rear groove, and the curved front groove and the straight rear groove are separated by a first barrier. The curved front groove is on the outer side of the straight front groove, and the curved front groove and the straight front groove are separated by a second barrier. Accordingly, in the aforementioned two patents, the overall length of the guiding grooves is large, and the working process of the coffeemaker is completed. Consequently, the length of the whole housing cannot be made small and the coffeemaker cannot be miniaturized. When water is boiled to clean the coffeemaker without any coffee capsule therein, there is a gap between the two frames since the circular edge of the coffee capsule does not exist between the two frames, and thus air-tightness cannot be formed. In order to ensure that the two frames form excellent air-tightness during the extraction, in the aforementioned two improved patents, a hydraulic piston is disposed inside the second frame to fill this spacing. That is, the second frame consists of a shell and a piston body inside the shell. During the extraction, the piston body can be driven by hydraulic pressure to move forward to fill this gap. However, this approach makes the structure of the second frame more complicated and also increases the cost.

Hence, a Chinese Invention CN103876633A (Patent No.: ZL201410066391.7) entitled Capsule Delivery and Rejection Mechanism for Beverage Extraction Device is invented, which has a simpler and more rational structure and allows for reliable capsule delivery and rejection. This mechanism has smaller overall size and low cost and can be assembled conveniently. However, this patent still has the following deficiencies.
1. During extraction, two jaws are forced to close by the second contact between a rear side surface of a hook and a rear end inner surface of a guiding hole, and it is ensured that the circular edge of the beverage capsule is located in grooves. In this way, it can be ensured that the backward movement of the second frame enables the backward movement of the grooves on the two jaws so as to drive the beverage capsule to separate from the chamber. Due to the backward movement of the second frame, the grooves have a hole stroke in the guiding hole. Within this period of time, due to the friction, the backward movement of the second frame may drive the jaws to move backward to a certain extent. At the same time, due to the backward movement of the second frame, the front outer end surface of the hook is separated from the front end inner surface of the guiding hole, and the jaws may not be kept at the original position, that is, the circular edge of the beverage capsule may not be located in the grooves. As a result, the beverage capsule cannot be smoothly carried out from the chamber, and the capsule rejection process is not reliable.
2. Guiding surfaces used for being in guide fit with the front outer surfaces of the grooves are disposed on left and right sides of the first frame. Each of the guiding surfaces has a first position and a second position, wherein the second position is located on an outer side of the first position and relatively at the front, and there is a smooth transition between the first position and the second position. The guiding surfaces are complex in structure, high in machining precision and disadvantageous for manufacturing, so that the manufacturing cost will be increased.
3. During the capsule loading, the jaws on two sides are limited only by sidewalls of the housing so that the jaws are kept in a trend to come closer inward. However, due to errors during the assembly, the jaws on two sides become loose. The loose jaws on two sides will cause the possible extension of the clamp portions at the front ends of the jaws. As a result, the clamp portions at the front ends of the jaws cannot clamp a beverage capsule. The capsule loading is not reliable and the capsule may fall off during the capsule loading process.

In view of the above situation, further improvements can be made to the capsule delivery and rejection mechanism for a beverage extraction device.

### Summary of the Invention

In view of the current situation of the prior art, a technical problem to be solved by the present invention is to provide a capsule delivery and rejection mechanism for a beverage extraction device which is more rational in structural design and more smooth in the capsule rejection/delivery action.

To solve the above technical problem, the improved capsule delivery and rejection mechanism for a beverage extraction device comprises: a housing; a first frame positioned inside the front portion of the housing, the first frame, a chamber for holding a capsule with a circular edge; a second frame, disposed inside the back portion of the housing and being movable forward and backward relative to the first frame under the driving of a driving structure; two jaws, each disposed at one of left and right sides of the second frame, and the two jaws being capable of opening or closing relative to the second frame, each jaw having a front portion and a back portion, the front end of each jaw being a clamp portion extending to the front of the second frame, a clamp capable of holding the beverage capsule being held between two clamp portions, each of the jaws being movable forward with the second frame and being movable forward and backward relative to the second frame, each clamp portion has a first hook which extends inward to hook the circular edge of the beverage capsule and pull the beverage capsule out; characterized in that, each of the left and right sides of the first frame has an abutment surface for receiving the front outer surface of each first hook; each jaw has a guiding hole arranged in the front-back direction, each of the left and right sides of the second frame has a second hook which is located inside the guiding hole and movable forward and backward relative to the jaws; the front side surface of the second hook touching the front end inner surface of the guiding hole defines a first contact, and the rear side surface of the second hook touching the rear end inner surface of the guiding hole defines a second contact; two elastic members used for acting on the two jaws and keeping the front portion s of the two jaws in a closed trend are disposed on the left side and the right side of the housing; when each jaw continues to move forward after each jaw moves forward to each abutment surface together with the second frame and each first hook touching the corresponding abutment surface, the second frame continues moving forward, and the second hook moves forward relative to the guiding hole, and the elastic member acts on the jaw; when the second frame moves forward to the front side surface of the second hook and comes into contact with the front end inner surface of the guiding hole, the second frame continues moving forward,, and the first contact will force the two jaws to move outward in order for making the two jaws to be opened and offering space for the beverage capsule; when the second frame moves backward to the rear side surface of the second hook and comes into contact with the rear end inner surface of the guiding hole, the elastic member acts on the jaw, so that the circular edge of the capsule is located inside the first hook after the two jaws are totally closed; and, during the further backward movement of the second frame, the second contact forces the jaws to move backward, so as to make the jaws be driven to move backward together with the second frame, and at the same time, the first hook which hooks the circular edge of the capsule pulls the capsule to leave the chamber.

Preferably, the front outer surface of the first hook is a curved surface. In this way, the front outer surface of the first hook is in cambered contact with the guiding surface, so it is easier to deflect the jaws.

As an improvement, both the contact surfaces of the first contact and the second contact are inclined, the first hook can more stably drive the front end of each jaw to deflect in an opening or closing direction. Both the front end inner surface and the rear end inner surface of the guiding hole are slopes or cambered surfaces that are gradually inclined outward from front to rear, the front side surface of the second hook is a cambered surface, the rear side surface of the second hook is a slope or a cambered surface that is gradually inclined outward from front to rear, and a curved surface for allowing the second hook to pass therethrough is formed on the clamp portion. In this way, during the retreat of the second frame, the jaws are always kept in a trend to clamp the circular edge of the beverage capsule, so that it is better ensured that the beverage capsule can be smoothly hooked out by the first hook and the capsule rejection is performed smoothly.

As a further improvement, the two elastic members are plate springs, one end of each of the plate springs is fixed to the housing, and slots are disposed at the outer surfaces of the jaws for resisting against the elastic ends of the plate springs. Since the elastic ends of the plate springs are resisted against the slots, the jaws are further positioned. In this way, in a route where the second frame moves backward and the first hook moves in the guiding hole, the backward movement of the second frame will not drive the jaws to move backward, and the jaws are kept in a closed trend. Thus, it is ensured that the circular edge of the beverage capsule is always located in the first hook, the jaws can carry the beverage capsule out from the chamber of the first frame, and the capsule rejection operation is more stable.

As a further improvement, detachable elastic buckle structures are disposed between the rear ends of the jaws and the housing. In a capsule loading state where the first frame and the second frame are completely opened, the rear ends of the jaws are detachably connected to the housing by the elastic buckle structures. In the capsule loading state, the jaws are connected to the housing by the buckle structures. The relative position of the jaws is difficult to change, and the clamp portions at the front ends of the jaws are always in a closed trend. Thus, it is effectively ensured that the clamping portions at the front ends of the jaws can clamp the beverage capsule and the occurrence of capsule fall-off is avoided during the capsule loading process.

Preferably, the elastic buckle structures comprises two elastic clamping pins that are disposed at the back portion of the jaws and arranged up and down at intervals in a height direction of the jaws, protruded clamping portions are disposed at ends of the elastic clamping pins, stop shoulders fitted with the clamping portions are disposed in the back portion of the housing, and end surfaces of the clamping portions in contact with the stop shoulders are slopes.

As an improvement, the housing and the first frame are integrally injection-molded together forming an integrally injection-molded part having an axial passage, and the second frame is located at the rear of the passage; the second frame has two limiting strips protruding outward respectively disposed at each of the left and right sides of the second frame, correspondingly, the housing has two guiding grooves respectively disposed at each of the left and right sides of the rear of the passage for receiving and guiding the limiting strips. Since the housing is integrally formed, the assembly process is simplified, it is convenient for batch production and the cost is reduced. By fitting the limiting grooves with the limiting strips, the second frame is more stably restricted in the rear portion of the housing, and the second frame is guided.

Each jaw is restricted between the limiting strip and the bottom of the guiding grooves, each guiding groove has a front portion and a rear portion, and the bottom surface of the rear portion of the guiding groove is in flat, and the bottom surface of the front portion of the guiding groove is a slope which is inclined outward from the back portion to the front portion of the housing; while, each limiting strip has a front portion and a rear portion, the outer surface of the front portion of each limiting strip is in flat, and the outer surface of the rear portion of each limiting strip is inclined inward from the front portion to the back portion of the housing. Within the first half period of time of the forward movement of the second frame, each jaw is clamped by the front plan of the limiting strip and the rear plan of the bottom surface of the guiding groove, so that it is ensured that each jaw will not be deflected within the first half period of time of the forward movement of the second frame. However, when each jaw is moved forward to a position where defection is to be performed, the front slope of the bottom surface of the guiding groove and the rear slope of the limiting strip dispose a space for the deflection of each jaw and also restrict the angle of deflection of each jaw to a certain extent.

Guiding slots are formed on outer surfaces of the limiting strips in a length direction, the jaws are inserted into the guiding slots by driving pins on the jaws, and the driving pins can slide along the guiding slots. The guiding slots restrict the driving pins up and down, so it is ensured that the jaws will not be deflected up and down. At the same time, the driving pins can slide along the guiding slots, so it is ensured that the jaws can slide back and forth relative to the second frame.

Preferably, friction strips made of flexible material are fixed on the outer surfaces of the jaws, the driving pins are made of flexible material, and the outer surface of each driving pins is exposed out from each jaw and comes into contact with the rear bottom surface of the back portion of each guiding groove. Portions of the friction strips and the driving pins exposed out from the jaws can eliminate the gap between the jaws and the sidewalls of the guiding grooves, so that the jaws are prevented from shaking in the capsule loading state.

Compared with the prior art, the present invention has the following advantages. In a state where the first frame and the second frame are completely opened, the two jaws can hold a beverage capsule, when they are closed; in a state where the second frame moves forward so that the beverage capsule is partially located inside the chamber, the front outer surfaces of the first hooks exactly come into contact with the abutment surfaces. The second frame continues moving forward, the second hooks move forward relative to the guiding holes due to the limiting effect of the abutment surfaces, and the elastic members act on the jaws. The second frame moves forward to a state where the front side surfaces of the second hooks come into contact with the front end inner surfaces of the guiding holes and then continues moving forward, the first contact applies an outward thrust force on the jaws so that the front ends of the jaws are forced to overcome the elastic force of the elastic members and thus opened, so that the beverage capsule is further pushed into the chamber. Then, the first frame and the second frame are completely closed to form an extraction chamber, so that the capsule loading is completed. When the second frame moves backward to a state where the rear side surfaces of the second hooks come into contact with the rear end inner surfaces of the guiding holes, the elastic members act on the jaws, so that the circular edge of the beverage capsule is located in the first hooks after the two jaws are closed. During the further backward movement of the second frame, the second contact keeps the jaws in a closed trend and applies a backward thrust force on the jaws. Thus, the jaws can be driven to move backward during the backward movement of the second frame, and the first hooks hook the circular edge of the beverage capsule to drive the beverage back to retreat from the chamber, so that the capsule rejection is completed.

Therefore, the capsule delivery and rejection mechanism realizes the capsule delivery and rejection process mainly by various interlocked fitting relations between the first hooks, the guiding holes on the jaws, the abutment surfaces and the contacting structure between the second hooks and the guiding holes. The capsule delivery and rejection design is very skillful, and the opening of the jaws beings when the beverage capsule substantially enters the chamber. During this process, the second hook has an idle stroke inside the guiding holes, so that the whole stroke is short. Thus, the overall size of the capsule delivery and rejection mechanism becomes smaller, and the miniaturization of coffeemakers is facilitated. Furthermore, the original complicated shaft-groove fitting structure is omitted, leading to simpler overall structure and manufacture process and low cost.

In the background patent, the jaws are forced to close by the first contacting structure, and the jaws are forced to open by the special design of the guiding surfaces, so the whole capsule delivery process includes the opening process of the jaws and the closing process of the jaws, and many fitting relations are needed in the whole mechanism design. However, in the present application, in the opening process of the left and right jaws during the capsule delivery process, the jaws are forced to open by the first contacting structure; and additionally, at the beginning of the capsule rejection process, the jaws are kept in a closed trend due to the elastic members, and the abutment surfaces block the jaws, so that the jaws can move relative to the second frame. Compared with the guiding surfaces in the background patent, the abutment surfaces are simpler in structure, so that the whole capsule delivery process is simpler. Moreover, the elastic members restrict the jaws. In a route where the second frame moves backward and the first hooks move in the guiding holes, the backward movement of the second frame will not drive the jaws to move backward, and the jaws are kept in a closed trend. Thus, it is ensured that the circular edge of the beverage capsule is always located in the first hooks, the jaws can carry the beverage capsule out from the chamber of the first frame, and the capsule rejection operation is more stable.

### Brief Description of the Drawings

Fig. 1 is a perspective view of the present invention (in an opened state ready for capsule loading);
Fig. 2 is a longitudinally sectional view of the present invention (in an opened state ready for capsule loading);
Fig. 3 is a sectional view of the present invention (in an opened state for capsule loading);
Fig. 4 is a sectional view of the present invention (in a state where the second frame moves forward to allow the front outer surfaces of the first hooks to come into contact with the abutment surfaces and the front side surfaces of the second hooks come into contact with the front end inner surfaces of the guiding holes);
Fig. 5 is a sectional view of the present invention (in a state where the second frame moves forward to allow the front outer surfaces of the first hooks to be separate from the guiding holes so as to open the jaws for purpose of offering space for the beverage capsule);
Fig. 6 is a sectional view of the present invention (in an extraction state where the first frame and the second frame are completely closed);
Fig. 7 is a sectional view of the present invention (in a state where the second frame moves backward to allow the second hooks to come into contact with the rear end inner surfaces of the guiding holes and the jaws are closed under the action of the elastic pins to allow the circular edge of the beverage capsule to be located in the first hooks);
Fig. 8 is a sectional view of the present invention (in a state where the second frame moves backward to allow the first hooks to carry the beverage capsule out from the chamber);
Fig. 9 is a sectional view of the present invention (in a state where the second frame is completely opened for capsule rejection);
Fig. 10 is a perspective view of the present invention when the jaws are mounted on the second frame and clamp the beverage capsule;
Fig. 11 is stereoscopic exploded view of the present invention when the jaws are mounted on the second frame and clamp the beverage capsule;
Fig. 12 is a perspective view of the jaws of the present invention;
Fig. 13 is a perspective view of the present invention when the jaws are connected to a housing by elastic buckle structures; and
Fig. 14 is a perspective view of the housing of the present invention.

### Detailed Description of the Preferred Embodiment

To enable a further understanding of the present invention content of the invention herein, refer to the detailed description of the invention and the accompanying drawings below:

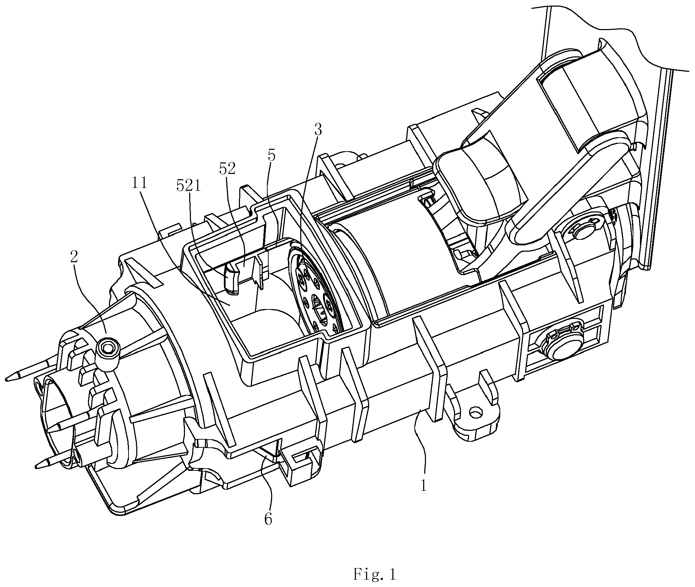

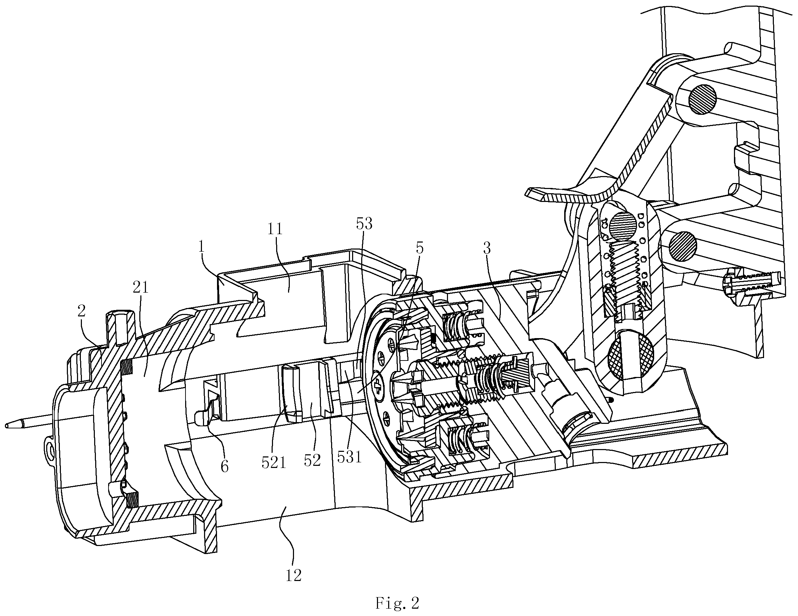

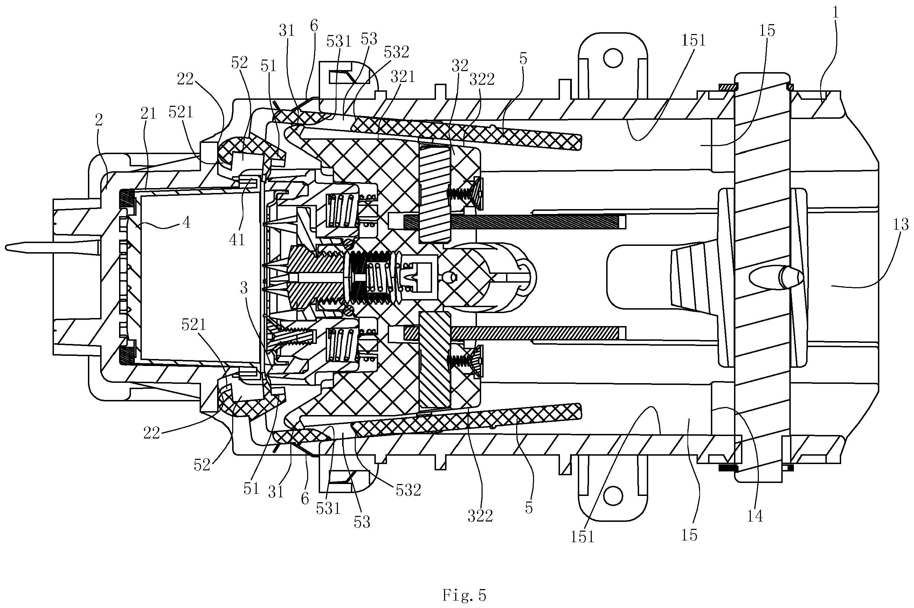

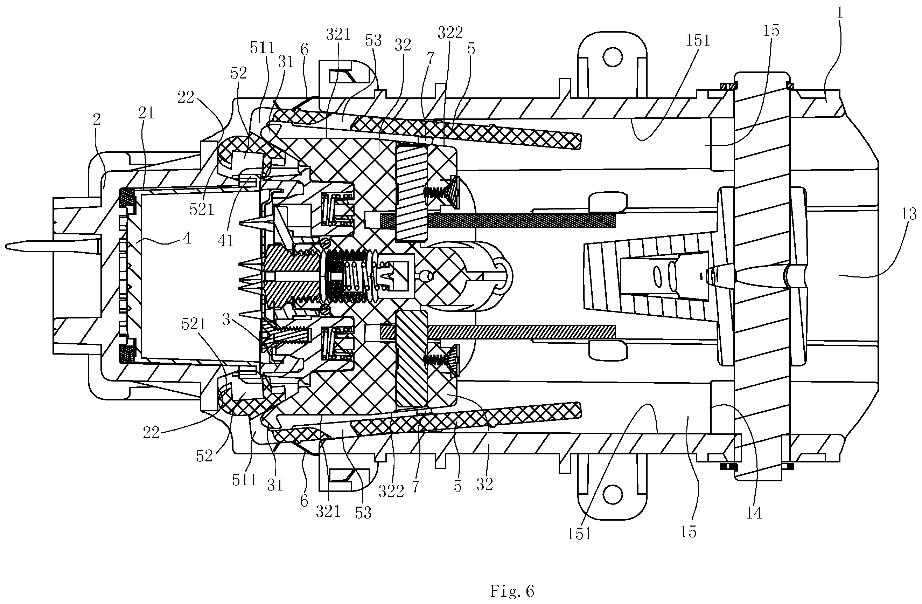

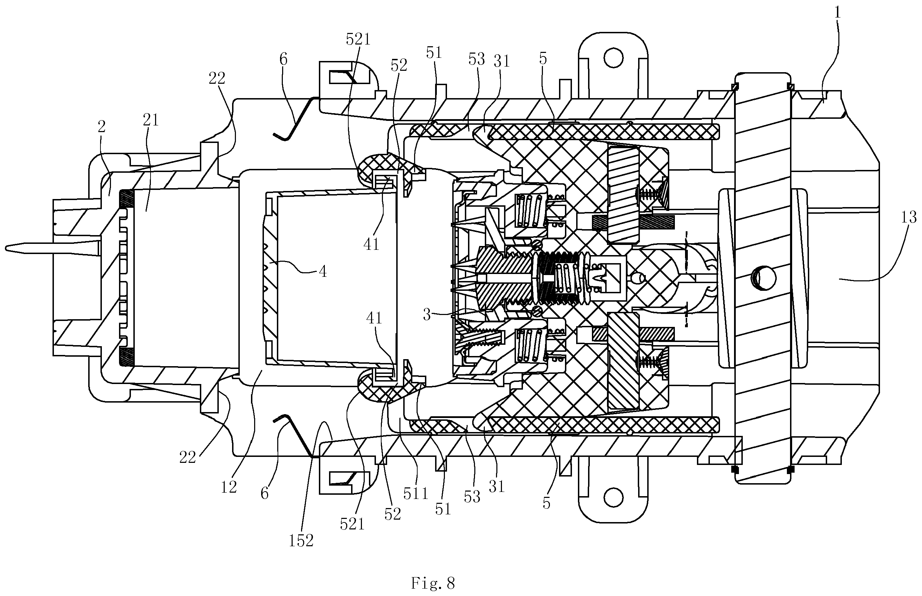

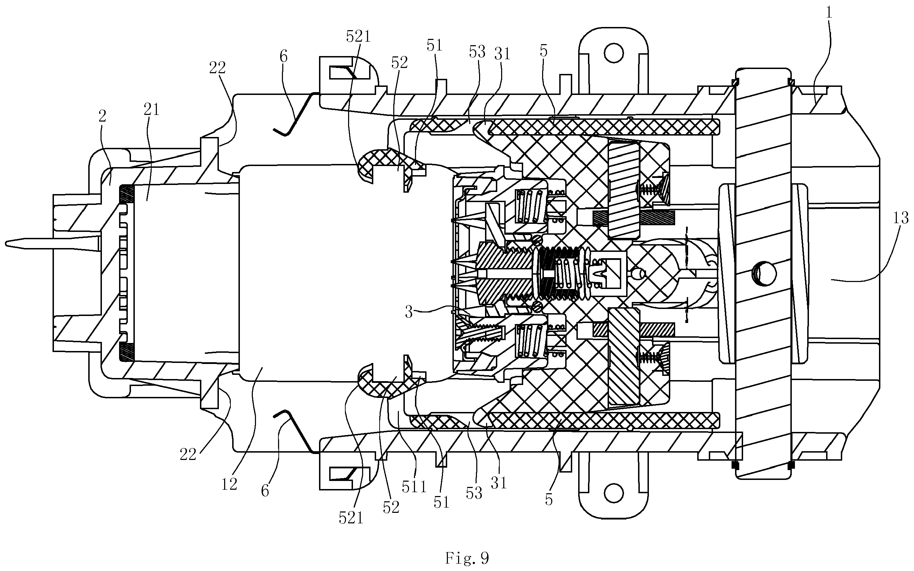

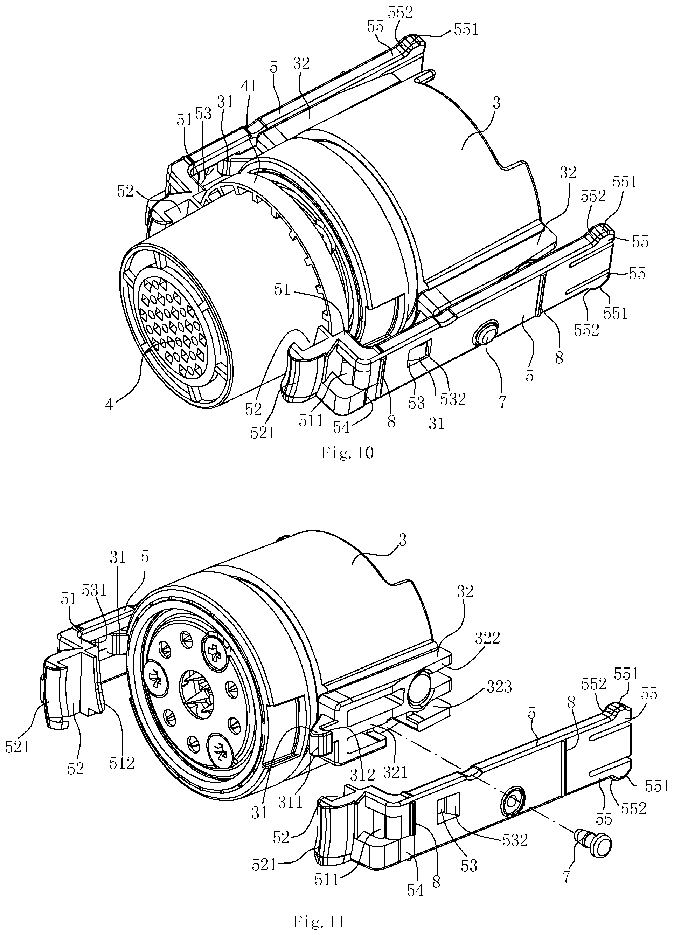

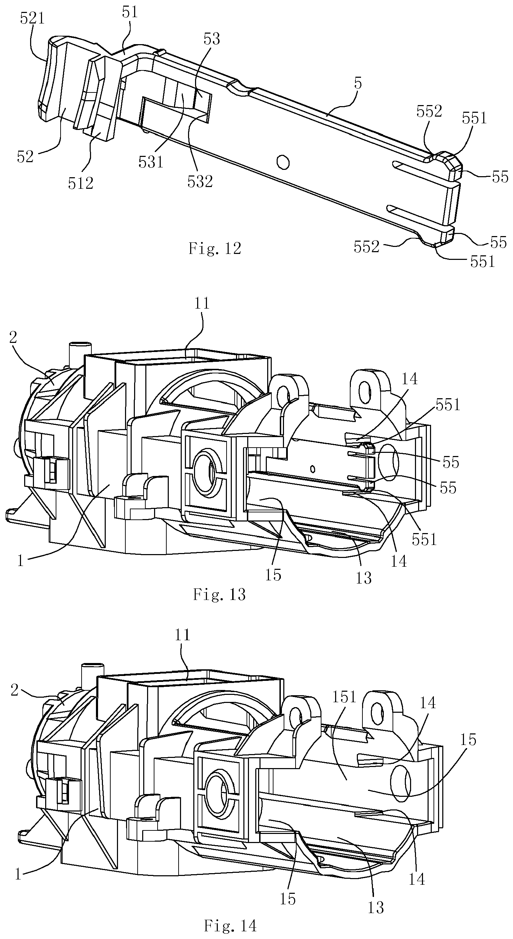

Figs. 1 - Fig. 14 show a preferred embodiment of the present invention.

An improved capsule delivery and rejection mechanism for a beverage extraction device comprises:
a housing 1 having a front portion, a back portion, a loading port 11, and a dropping port 12;
a first frame 2 positioned inside the front portion of the housing 1, the first frame 2, a chamber 21 for holding a capsule 4 with a circular edge 41;
a second frame 3, disposed inside the back portion of the housing 1 and being movable forward and backward relative to the first frame 2 under the driving of a driving structure; wherein the driving structure can be connecting-rod structure, which can refer to the background parts, and can be, of course, a hydraulic driving structure; the housing 1 and the first frame 2 are integrally injection-molded forming an integrally injection-molded part having an axial passage 13, and the second frame 2 is located at the rear of the passage 13, the second frame 3 has two limiting strips 32 protruding outward respectively disposed at each of the left and right sides of the second frame 3, correspondingly, the housing 1 has two guiding grooves 15 respectively disposed at each of the left and right sides of the rear of the passage 13 for receiving and guiding the limiting strips 32; and
two jaws 5, substantially L-shaped, each disposed at one of left and right sides of the second frame 3, and the two jaws 5 being capable of opening or closing relative to the second frame 3, each jaw 5 having a front portion and a back portion, the front end of each jaw 5 being a clamp portion 51 extending to the front of the second frame 3, a clamp capable of holding the beverage capsule 4 being held between two clamp portions 51, the lower portion of the inner end surface of the clamp portion 51 being a cambered surface 512 used for supporting the surrounding of the beverage capsule 4. Each jaw 5 is moveable forward with the second frame 3 and movable forward and backward relative to the second frame 3. each clamp portion 51 has a first hook 52 which extends inward to hook the circular edge 41 of the beverage capsule 4 and pull the beverage capsule 4 out. The first hook 52 actually is a U-shaped groove which running through vertically. The opening of the first hook 52 is arranged inward, and the front outer surface 521 of the first hook 52 is a curved surface.

Detachable elastic buckle structures are disposed between the rear ends of the jaws 5 and the housing 1. In a capsule loading state where the first frame 2 and the second frame 3 are completely opened, the rear ends of the jaws 5 are detachably connected to the housing 1 by the elastic buckle structures. The elastic buckle structures comprises two elastic clamping pins 55 that are disposed at the back portion of the jaws 5 and arranged up and down at intervals in a height direction of the jaws 5, protruded clamping portions 551 are disposed at ends of the elastic clamping pins 55, stop shoulders 14 fitted with the clamping portions 551 are disposed in the back portion of the housing 1, and end surfaces 552 of the clamping portions 551 in contact with the stop shoulders 14 are slopes.

Each of the left and right sides of the first frame 2 has an abutment surface 22 for receiving the front outer surface 521 of each first hook 52 and guiding each first hook 52 to move outward.

Each jaw 5 has a guiding hole 53 arranged in the front-back direction, each of the left and right sides of the second frame 3 has a second hook 31 which is located inside the guiding hole 53 and movable forward and backward relative to the jaws 5; the front side surface 311 of the second hook 31 touching the front end inner surface 531 of the guiding hole 53 defines a first contact, and the rear side surface 312 of the second hook 31 touching the rear end inner surface 532 of the guiding hole 53 defines a second contact.

Both the contact surfaces of the first contact and the second contact are inclined, both the front end inner surface 531 and the rear end inner surface 532 of the guiding hole 53 are slopes or cambered surfaces that are gradually inclined outward from front to rear, the front side surface 311 of the second hook 31 is a cambered surface, the rear side surface 312 of the second hook 31 is a slope or a cambered surface that is gradually inclined outward from front to rear, and a curved surface 511 for allowing the second hook 31 to pass therethrough is formed on the clamp portion 51.

Each jaw 5 is restricted between the limiting strip 32 and the bottom of the guiding grooves 15, each guiding groove 15 has a front portion and a rear portion, the bottom surface of the rear portion 151 of the guiding groove 15 is in flat, and the bottom surface of the front portion 152 of the guiding groove 15 is a slope which is inclined outward from the back portion to the front portion of the housing 1; while, each limiting strip 32 has a front portion and a rear portion, the outer surface of the front portion 321 of each limiting strip 32 is in flat, and the outer surface of the rear portion 32 of each limiting strip 32 is inclined inward from the front portion to the back portion of the housing 1. Guiding slots 323 are formed on the outer surfaces of the limiting strips 32 in a length direction, the jaws 5 are inserted into the guiding slots 323 by driving pins 7 on the jaws 5, and the driving pins 7 can slide along the guiding slots323. Friction strips 8 made of flexible material are fixed on the outer end surface of the jaws 5, the driving pins 7 are made of flexible material (silica gel), and the outer surface of each driving pin 7 is exposed out from the each jaw 5 and comes into contact with the bottom surface of the back portion 151 of each guiding groove 15.

Two elastic members 6 used for acting on the two jaws 5 and keeping the front portion s of the two jaws 5 in a closed trend are disposed on the left side and the right side of the housing 1. The two elastic members 6 are plate springs, one end of each of the plate springs is fixed to the housing 1, and slots 54 are disposed at the outer surfaces of the jaws 5 for resisting against the elastic ends of the plate springs.

In a state where the first frame 2 and the second frame 3 are completely opened, the two jaws 5 can hold a beverage capsule 4 when they are closed. The beverage capsule 4 is located between the two clamp portions, and the lower portion of the body of the beverage capsule 4 is placed on the cambered surfaces 512 of the clamp portions 51, and the circular edge 41 of the beverage capsule 4 is located between the front end surface of the second frame 3 and the rear end surfaces of the clamp portions 51. The jaws 5 are connected to the housing 1 by the buckle structures, so the relative position of the jaws 5 is difficult to be loose, and the clamp portions 51 at the front ends of the jaws are always in a closed trend. Thus, it is effectively ensured that the clamp portions 51 at the front ends of the jaws 5 can hold the beverage bag 4 and the occurrence of capsule dropping is avoided during the loading process.

When each jaw 5 continues to move forward after each jaw 5 moves forward to the each abutment surface 22 together with the second frame 3 and each first hook 52 touching the corresponding abutment surface 22, the second frame 3 continues moving forward, and the second hook 31 moves forward relative to the guiding hole 53, and the elastic member 6 acts on the jaw so that the front ends of the jaws 5 are kept in a closed trend.

When the second frame 3 moves forward to the front side surface 311 of the second hook 31 and comes into contact with the front end inner surface 531 of the guiding hole 53, the second frame 3 continues moving forward,, and the first contact will force the two jaws 5 to move outward in order for making the two jaws 5 to be opened and offering space for the beverage capsule 4.

When the second frame 3 moves backward to the rear side surface 312 of the second hook 31 and comes into contact with the rear end inner surface 532 of the guiding hole 53, the elastic member 6 acts on the jaw 5, so that the circular edge 41 of the capsule 4 is located inside the first hook 52 after the two jaws 5 are totally closed.

During the further backward movement of the second frame 3, the second contact keeps the jaws 5 in a closed trend and forces the jaws 5 to move backward, so as to make the jaws 5 be driven to move backward together with the second frame 3, and at the same time, the first hook 52 which hooks the circular edge 41 of the capsule 4 pulls the capsule 4 to leave the chamber 21.

The operating process of the capsule delivery and rejection mechanism is as follows.

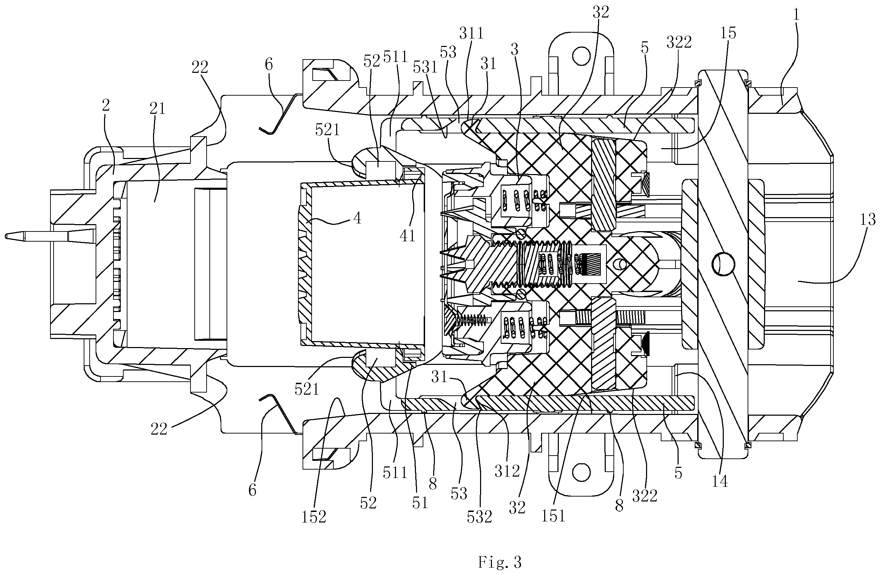

Capsule loading: As shown in Fig. 3, the driving structure drives the second frame 3 to move backward to open, the two jaws 5 are closed and thus can hold the beverage capsule 4, the beverage capsule 4 is loaded from the loading port 11 and placed between the two clamp portions, with the lower portion of the body of the beverage capsule 4 being rested on the cambered surfaces 512 of the clamp portions 51, and the circular edge 41 of the beverage capsule 4 being located between the front end surface of the second frame 3 and the rear end surfaces of the clamp portions 51.

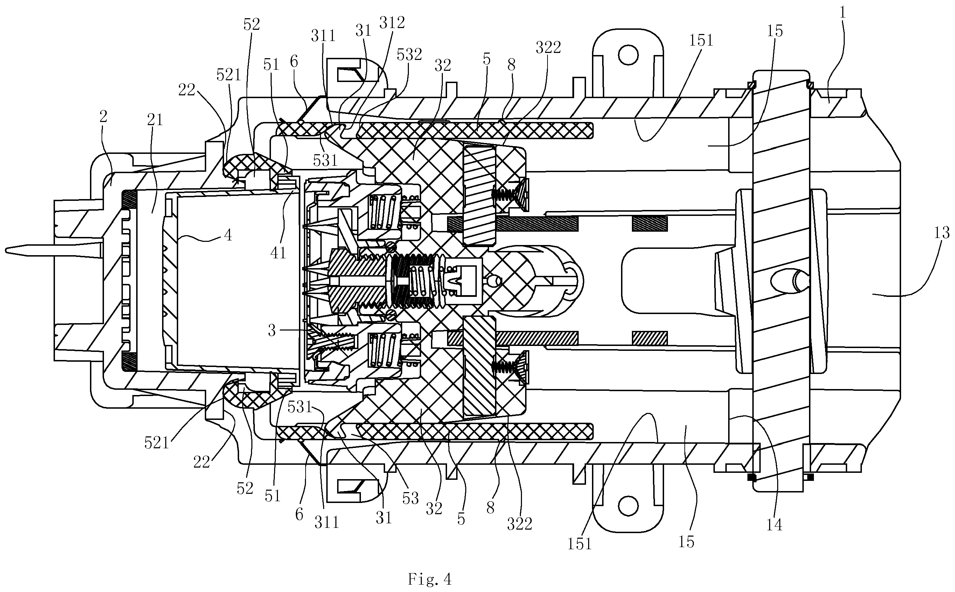

Capsule delivery: As shown in Figs. 4-6, the second frame 3 moves forward, and since the circular edge 41 of the beverage capsule 4 is between the front end surface of the second frame 3 and the rear end surfaces of the clamp portions 51, the forward movement of the second frame 3 can drive the beverage capsule 4 and the jaws 5 to move forward together; and in a state where the beverage capsule 4 is partially located inside the chamber 21, the front outer surfaces 521 of the first hooks 52 come into contact with the abutment surfaces 22. The second frame 3 continues moving forward. Due to the limiting effect of the abutment surfaces 22, the second frame 3 moves forward relatives to the jaws 5, that is, the second hooks 31 move forward relative to the guiding holes 53; and at the same time, the elastic members 6 act on the jaws 5, and the elastic ends of the elastic members 6 are resisted against the slots 54 of the jaws 5. The second frame 3 further moves forward after moving forward to a state where the front side surfaces 311 of the second hooks 31 come into contact with the rear end inner surfaces 532 of the guiding holes 53. The first contact (slope fit) applies an outward thrust force on the jaws 5 so that the front ends of the jaws 5 are forced to overcome the elastic force of the elastic members 6 and thus open and offer space for the beverage capsule 4, in order to ensure that the beverage capsule 4 is further pushed into the chamber 21. The first frame 2 and the second frame 3 are completely closed to form an extraction chamber to complete the capsule loading. Then, extraction can be started.

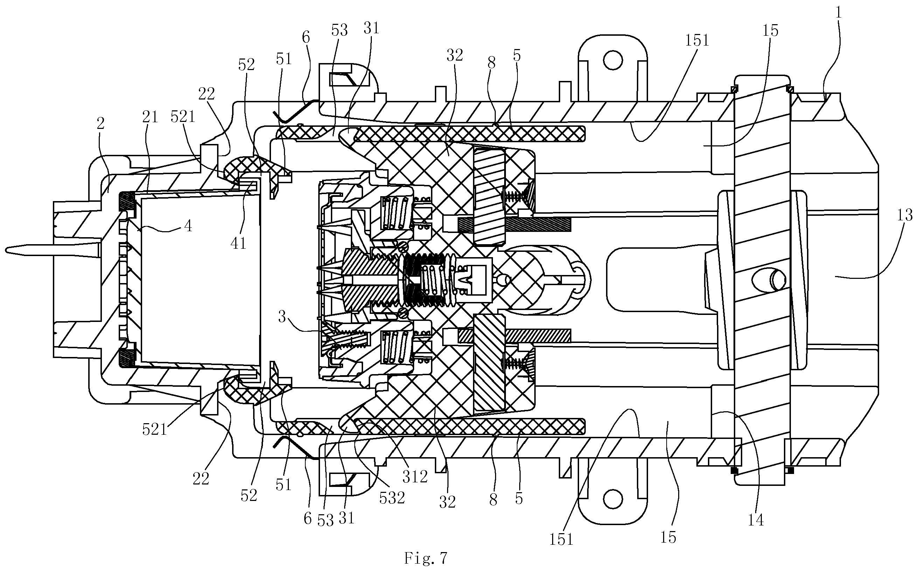

Capsule rejection: At the end of extraction, as shown in Figs. 7- Fig. 9, the second frame 3 moves backward, the second hooks 31 move backward relative to the guiding holes 53, until the second hooks 31 come into the rear end inner surfaces 532 of the guiding holes 53. During this process, the elastic members 6 always act on the jaws 5, so the backward movement of the second frame 3 will not drive the jaws 5 to move backward, so that the jaws 5 are kept in a closed trend. Thus, it is ensured that the circular edge 41 of the beverage capsule 4 is always located in the first hooks 52 and the jaws 5 can carry the beverage capsule 4 out of the chamber 21 of the first frame 2. The capsule rejection operation is more stable. During the further backward movement of the second frame 3, the second contact keeps the jaws 5 in a closed trend and applies a backward thrust force to the jaws 5, so that the second fame 3 drives the jaws 5 to move backward during its backward movement and the first hooks 53 hook the circular edge 41 of the beverage capsule 4 and retreat the beverage capsule 4 from the chamber 21. Thus, the capsule rejection is completed.

The protection scope of the present invention is not limited to each embodiments described in this description. Any changes and replacements made on the basis of the scope of the present invention patent and of the description shall be included in the scope of the present invention as defined in the appended claims.

## Claims

1. An improved capsule delivery and rejection mechanism for a beverage extraction device, comprising:
a housing (1);
a first frame (2) positioned inside a front portion of the housing (1), the first frame (2), a chamber (21) for holding a beverage capsule (4) with a circular edge (41);
a second frame (3), disposed inside a back portion of the housing (1) and being movable forward and backward relative to the first frame (2) under the driving of a driving structure;
two jaws (5), each disposed at one of left and right sides of the second frame (3), and the two jaws (5) being capable of opening or closing relative to the second frame (3), a front end of each jaw (5) being a clamp portion (51) extending to the uttermost front of the second frame (3), a clamp capable of holding the beverage capsule (4) being held between two clamp portions (51), each of the jaws (5) being movable forward with the second frame (3) and being movable forward and backward relative to the second frame (3), each clamp portion (51) has a first hook (52) which extends inward to hook the circular edge (41) of the beverage capsule (4) and pull the beverage capsule (4) out;
**characterized in that**, each of the left and right sides of the first frame (2) has an abutment surface (22) for receiving a front outer surface (521) of each first hook (52);
each jaw (5) has a guiding hole (53) arranged in the front-back direction, each of the left and right sides of the second frame (3) has a second hook (31) which is located inside the guiding hole (53) and movable forward and backward relative to the jaws (5); a front side surface (311) of the second hook (31) touching a front end inner surface (531) of the guiding hole (53) defines a first contact, and a rear side surface (312) of the second hook (31) touching a rear end inner surface (532) of the guiding hole (53) defines a second contact;
two elastic members (6) used for acting on the two jaws (5) and keeping front portions of the two jaws (5) in a closed trend are disposed on a left side and a right side of the housing (1);
after each jaw (5) moves forward to each abutment surface (22) together with the second frame (3) and each first hook (52) touching the corresponding abutment surface (22), the second frame (3) continues moving forward, and the second hook (31) moves forward relative to the guiding hole (53), and the elastic member (6) acts on the jaw (5);
when the second frame (3) moves forward to the front side surface (311) of the second hook (31) and comes into contact with the front end inner surface (531) of the guiding hole (53), the second frame (3) continues moving forward, and the first contact will force the two jaws (5) to move outward in order for making the two jaws (5) to be opened and offering space for the beverage capsule (4);
when the second frame (3) moves backward to the rear side surface (312) of the second hook (31) and comes into contact with the rear end inner surface (532) of the guiding hole (53), the elastic member (6) acts on the jaw (5), so that the circular edge (41) of the capsule (4) is located inside the first hook (52) after the two jaws (5) are totally closed; and,
during the further backward movement of the second frame (3), the second contact forces the jaws (5) to move backward, so as to make the jaws (5) be driven to move backward together with the second frame (3), and at the same time, the first hook (52) which hooks the circular edge (41) of the capsule (4) pulls the capsule (4) to leave the chamber (21).

2. The capsule delivery and rejection mechanism according to claim 1, **characterized in that**, the front outer surface (521) of the first hook (52) is a curved surface.

3. The capsule delivery and rejection mechanism according to claim 1 or 2, **characterized in that**, both the contact surfaces of the first contact and the second contact are inclined, both the front end inner surface (531) and the rear end inner surface (532) of the guiding hole (53) are slopes or cambered surfaces that are gradually inclined outward from front to rear, the front side surface (311) of the second hook (31) is a cambered surface, the rear side surface (312) of the second hook (31) is a slope or a cambered surface that is gradually inclined outward from front to rear, and a curved surface (511) for allowing the second hook (31) to pass therethrough is formed on the clamp portion (51).

4. The capsule delivery and rejection mechanism according to one of claims 1-3, **characterized in that**, the two elastic members (6) are plate springs, one end of each of the plate springs is fixed to the housing (1), and slots (54) are disposed at the outer surfaces of the jaws (5) for resisting against the elastic ends of the plate springs.

5. The capsule delivery and rejection mechanism according to one of claims 1-4, **characterized in that**, detachable elastic buckle structures are disposed between the rear ends of the jaws (5) and the housing (1); in a capsule loading state where the first frame (2) and the second frame (3) are completely opened, the rear ends of the jaws (5) are detachably connected to the housing (1) by the elastic buckle structures.

6. The capsule delivery and rejection mechanism according to claim 5, **characterized in that**, the elastic buckle structures comprises two elastic clamping pins (55) that are disposed at the back portion of the jaws (5) and arranged up and down at intervals in a height direction of the jaws (5), protruded clamping portions (551) are disposed at ends of the elastic clamping pins (55), stop shoulders (14) fitted with the clamping portions (551) are disposed in the back portion of the housing (1), and end surfaces (552) of the clamping portions (551) in contact with the stop shoulders (14) are slopes.

7. The capsule delivery and rejection mechanism according to one of claims 1-6, **characterized in that**, the housing (1) and the first frame (2) are integrally injection-molded forming an integrally injection-molded part having an axial passage (13), and the second frame (3) is located at the rear of the passage (13), the second frame (3) has two limiting strips (32) protruding outward respectively disposed at each of the left and right sides of the second frame (3),
correspondingly, the housing (1) has two guiding grooves (15) respectively disposed at each of the left and right sides of the rear of the passage (13) for receiving and guiding the limiting strips (32).

8. The capsule delivery and rejection mechanism according to claim 7, **characterized in that**, each jaw (5) is restricted between the limiting strip (32) and the bottom of the guiding grooves (15), each guiding groove (15) has a front portion and a rear portion, the bottom surface of the rear portion (151) of the guiding groove (15) is in flat, and the bottom surface of the front portion (152) of the guiding groove (15) is a slope which is inclined outward from the back portion to the front portion of the housing (1); each limiting strip (32) has a front portion and a rear portion, the outer surface of the front portion (321) of each limiting strip (32) is in flat, and the outer surface of the rear portion (322) of each limiting strip (32) is inclined inward from the front portion to the back portion of the housing (1).

9. The capsule delivery and rejection mechanism according to claim 7, **characterized in that**, guiding slots (323) are formed on the outer surfaces of the limiting strips (32) in a length direction, the jaws (5) are inserted into the guiding slots (323) by driving pins (7) on the jaws (5), and the driving pins (7) can slide along the guiding slots (323).

10. The capsule delivery and rejection mechanism according to claim 7, **characterized in that**, friction strips (8) made of flexible material are fixed on the outer surfaces of the jaws (5), the driving pins are made of flexible material, and the outer surface of each driving pin (7) is exposed out from each jaw (5) and comes into contact with the bottom surface of the back portion (151) of each guiding groove (15).

## Patentansprüche

1. Ein verbesserter Kapselführungs- und -ausstoßmechanismus für eine Getränkeextraktionsvorrichtung, umfassend:
ein Gehäuse (1);
einen ersten Rahmen (2), der innerhalb eines vorderen Abschnitts des Gehäuses (1) positioniert ist, wobei der erste Rahmen (2) eine Kammer (21) zum Halten einer Getränkekapsel (4) mit einem kreisförmigen Rand (41) aufweist;
einen zweiten Rahmen (3), der innerhalb eines hinteren Abschnitts des Gehäuses (1) angeordnet und relativ zum ersten Rahmen (2) vorwärts und rückwärts bewegbar ist, wenn er von einer Antriebsstruktur angetrieben wird;
zwei Backen (5), die jeweils an einer der linken und rechten Seiten des zweiten Rahmens (3) angeordnet sind, wobei die beiden Backen (5) relativ zum zweiten Rahmen (3) geöffnet oder geschlossen werden können, wobei ein vorderes Ende jeder Backe (5) ein Klemmabschnitt (51) ist, der sich bis zur äußersten Vorderseite des zweiten Rahmens (3) erstreckt, wobei eine Klemme, die die Getränkekapsel (4) halten kann, zwischen zwei Klemmabschnitten (51) gehalten wird, wobei jede der Backen (5) mit dem zweiten Rahmen (3) vorwärts bewegbar ist und relativ zum zweiten Rahmen (3) vorwärts und rückwärts bewegbar ist, wobei jeder Klemmabschnitt (51) einen ersten Haken (52) aufweist, der sich nach innen erstreckt, um den kreisförmigen Rand (41) der Getränkekapsel (4) einzuhaken und die Getränkekapsel (4) herauszuziehen;
**dadurch gekennzeichnet, dass** jede der linken und rechten Seiten des ersten Rahmens (2) eine Anschlagfläche (22) zur Aufnahme einer vorderen Außenfläche (521) jedes ersten Hakens (52) aufweist;
jede Backe (5) ein Führungsloch (53) aufweist, das in der Richtung von vorne nach hinten angeordnet ist, jede der linken und rechten Seiten des zweiten Rahmens (3) einen zweiten Haken (31) aufweist, der sich innerhalb des Führungslochs (53) befindet und relativ zu den Backen (5) vorwärts und rückwärts bewegbar ist; eine vordere Seitenfläche (311) des zweiten Hakens (31), die eine Innenfläche (531) des vorderen Endes des Führungslochs (53) berührt, einen ersten Kontakt definiert, und eine hintere Seitenfläche (312) des zweiten Hakens (31), die eine Innenfläche (532) des hinteren Endes des Führungslochs (53) berührt, einen zweiten Kontakt definiert;
zwei elastische Elemente (6), die dazu verwendet werden, auf die beiden Backen (5) zu wirken und vordere Abschnitte der beiden Backen (5) in einer geschlossenen Stellung zu halten, auf einer linken und einer rechten Seite des Gehäuses (1) angeordnet sind;
nachdem sich jede Backe (5) zusammen mit dem zweiten Rahmen (3) zu jeder Anschlagfläche (22) vorwärts bewegt hat und jeder erste Haken (52) die entsprechende Anschlagfläche (22) berührt, sich der zweite Rahmen (3) weiter vorwärts bewegt und der zweite Haken (31) sich relativ zu dem Führungsloch (53) vorwärts bewegt und das elastische Element (6) auf die Backe (5) wirkt;
wenn sich der zweite Rahmen (3) vorwärts zur vorderen Seitenfläche (311) des zweiten Hakens (31) bewegt und mit der Innenfläche (531) des vorderen Endes des Führungslochs (53) in Kontakt kommt, sich der zweite Rahmen (3) weiter vorwärts bewegt und der erste Kontakt die beiden Backen (5) zwingt, sich nach außen zu bewegen, so dass sie geöffnet werden und Platz für die Getränkekapsel (4) bieten;
wenn sich der zweite Rahmen (3) nach hinten zur hinteren Seitenfläche (312) des zweiten Hakens (31) bewegt und mit der Innenfläche (532) des hinteren Endes des Führungslochs (53) in Kontakt kommt, das elastische Element (6) auf die Backe (5) wirkt, so dass sich der kreisförmige Rand (41) der Getränkekapsel (4) innerhalb des ersten Hakens (52) befindet, nachdem die beiden Backen (5) vollständig geschlossen sind; und
während der weiteren Rückwärtsbewegung des zweiten Rahmens (3) der zweite Kontakt eine Rückwärtsbewegung der Backen (5) bewirkt, so dass die Backen (5) zusammen mit dem zweiten Rahmen (3) rückwärts bewegt werden und gleichzeitig der erste Haken (52), der den kreisförmigen Rand (41) der Getränkekapsel (4) einhakt, die Getränkekapsel (4) aus der Kammer (21) herauszieht.

2. Mechanismus zum Führen und Ausstoßen von Kapseln nach Anspruch 1, **dadurch gekennzeichnet, dass** die vordere Außenfläche (521) des ersten Hakens (52) eine gekrümmte Fläche ist.

3. Kapselführungs- und -ausstoßmechanismus nach Anspruch 1 oder 2, **dadurch gekennzeichnet, dass** sowohl die Kontaktflächen des ersten Kontakts als auch des zweiten Kontakts geneigt sind, sowohl die vordere Innenfläche (531) als auch die hintere Innenfläche (532) des Führungslochs (53) Schrägen oder gewölbte Flächen sind, die von vorne nach hinten allmählich nach außen geneigt sind, die vordere Seitenfläche (311) des zweiten Hakens (31) eine gewölbte Fläche ist, die hintere Seitenfläche (312) des zweiten Hakens (31) eine Schräge oder eine gewölbte Fläche ist, die von vorne nach hinten allmählich nach außen geneigt ist, und eine gekrümmte Fläche (511) an dem Klemmabschnitt (51) ausgebildet ist, um den zweiten Haken (31) hindurchtreten zu lassen.

4. Kapselführungs- und -ausstoßmechanismus nach einem der Ansprüche 1-3, **dadurch gekennzeichnet, daß** die beiden elastischen Elemente (6) Plattenfedern sind, ein Ende jeder der Plattenfedern am Gehäuse (1) befestigt ist und Schlitze (54) an den Außenflächen der Backen (5) angeordnet sind, um die elastischen Enden der Plattenfedern zu halten.

5. Kapselführungs- und -ausstoßmechanismus nach einem der Ansprüche 1-4, **dadurch gekennzeichnet, daß** zwischen den hinteren Enden der Backen (5) und dem Gehäuse (1) lösbare elastische Schnallenstrukturen angeordnet sind; in einem Kapselbelastungszustand, in dem der erste Rahmen (2) und der zweite Rahmen (3) vollständig geöffnet sind, die hinteren Enden der Backen (5) durch die elastischen Schnallenstrukturen lösbar mit dem Gehäuse (1) verbunden sind.

6. Kapselführungs- und -ausstoßmechanismus nach Anspruch 5, **dadurch gekennzeichnet, dass** die elastischen Schnallenstrukturen zwei elastische Klemmstifte (55) umfassen, die am hinteren Teil der Backen (5) und in Höhenrichtung der Backen (5) abschnittsweise oben und unten angeordnet sind, hervorstehende Klemmabschnitte (551) an den Enden der elastischen Klemmstifte (55) angeordnet sind, mit den Klemmabschnitten (551) versehene Anschlagschultern (14) im hinteren Teil des Gehäuses (1) angeordnet sind, und die Endflächen (552) der Klemmabschnitte (551), die mit den Anschlagschultern (14) in Kontakt stehen, geneigt sind.

7. Kapselführungs- und -ausstoßmechanismus nach einem der Ansprüche 1-6, **dadurch gekennzeichnet, dass** das Gehäuse (1) und der erste Rahmen (2) einstückig spritzgegossen sind und ein einstückig spritzgegossenes Teil mit einem axialen Durchgang (13) bilden, und der zweite Rahmen (3) an der Rückseite des axialen Durchgangs (13) angeordnet ist, wobei der zweite Rahmen (3) zwei nach außen vorstehende Randstreifen (32) aufweist, die jeweils an jeder der linken und rechten Seiten des zweiten Rahmens (3) angeordnet sind,
das Gehäuse (1) zwei entsprechende Führungsnuten (15) aufweist, die jeweils an der linken und rechten Seite der Rückseite des axialen Durchgangs (13) zur Aufnahme und Führung der Randstreifen (32) angeordnet sind.

8. Kapselführungs- und -ausstoßmechanismus nach Anspruch 7, **dadurch gekennzeichnet, dass** jede Backe (5) von dem Randstreifen (32) und dem Boden der Führungsnuten (15) begrenzt wird, jede Führungsnut (15) einen vorderen Abschnitt und einen hinteren Abschnitt aufweist, die Bodenfläche des hinteren Abschnitts (151) der Führungsnut (15) flach ist und die Bodenfläche des vorderen Abschnitts (152) der Führungsnut (15) eine Schräge ist, die vom hinteren Abschnitt zum vorderen Abschnitt des Gehäuses (1) nach außen geneigt ist; jeder Randstreifen (32) einen vorderen Abschnitt und einen hinteren Abschnitt aufweist, die Außenfläche des vorderen Abschnitts (321) jedes Randstreifens (32) flach ist und die Außenfläche des hinteren Abschnitts (322) jedes Randstreifens (32) von dem vorderen Abschnitt zu dem hinteren Abschnitt des Gehäuses (1) nach innen geneigt ist.

9. Kapselführungs- und Ausscheidemechanismus nach Anspruch 7, **dadurch gekennzeichnet, daß** an den Außenflächen der Randstreifen (32) in Längsrichtung Führungsschlitze (323) ausgebildet sind, die Backen (5) durch Mitnehmerstifte (7) an den Backen (5) in die Führungsschlitze (323) eingeführt werden und die Mitnehmerstifte (7) entlang der Führungsschlitze (323) gleiten können.

10. Kapselführungs- und -ausstoßmechanismus nach Anspruch 7, **dadurch gekennzeichnet, daß** an den Außenflächen der Backen (5) Reibstreifen (8) aus flexiblem Material befestigt sind, die Mitnehmerstifte aus flexiblem Material bestehen und die Außenfläche jedes Mitnehmerstiftes (7) aus jeder Backe (5) herausragt und mit der Bodenfläche des hinteren Teils (151) jeder Führungsnut (15) in Kontakt kommt.

## Revendications

1. Un mécanisme amélioré de distribution et de rejet de capsules pour un dispositif d'extraction de boissons, comprenant:
un boîtier (1);
un premier cadre (2) positionné à l'intérieur d'une partie avant du boîtier (1), le premier cadre (2), une chambre (21) pour contenir une capsule de boisson (4) avec un bord circulaire (41);
un deuxième cadre (3), disposé à l'intérieur d'une partie arrière du boîtier (1) et pouvant être déplacé vers l'avant et vers l'arrière par rapport au premier cadre (2) sous l'action d'une structure d'entraînement;
deux mâchoires (5), chacune étant disposée sur l'un des côtés gauche et droit du deuxième cadre (3), et les deux mâchoires (5) étant capables de s'ouvrir ou de se fermer par rapport au deuxième cadre (3), une extrémité avant de chaque mâchoire (5) étant une partie de serrage (51) s'étendant jusqu'à l'extrémité avant du deuxième cadre (3), une pince capable de maintenir la capsule de boisson (4) étant maintenue entre deux parties de serrage (51), chacune des mâchoires (5) étant mobile vers l'avant avec le deuxième cadre (3) et étant mobile vers l'avant et vers l'arrière par rapport au deuxième cadre (3), chaque partie de pince (51) a un premier crochet (52) qui s'étend vers l'intérieur pour accrocher le bord circulaire (41) de la capsule de boisson (4) et tirer la capsule de boisson (4) vers l'extérieur;
**caractérisé en ce que**, chacun des côtés gauche et droit du premier cadre (2) a une surface de butée (22) pour recevoir une surface extérieure avant (521) de chaque premier crochet (52);
chaque mâchoire (5) a un trou de guidage (53) disposé dans la direction avant-arrière, chacun des côtés gauche et droit du deuxième cadre (3) a un deuxième crochet (31) qui est situé à l'intérieur du trou de guidage (53) et qui peut être déplacé vers l'avant et vers l'arrière par rapport aux mâchoires (5); une surface latérale avant (311) du deuxième crochet (31) touchant une surface intérieure d'extrémité avant (531) du trou de guidage (53) définit un premier contact, et une surface latérale arrière (312) du deuxième crochet (31) touchant une surface intérieure d'extrémité arrière (532) du trou de guidage (53) définit un deuxième contact;
deux éléments élastiques (6) utilisés pour agir sur les deux mâchoires (5) et maintenir les parties avant des deux mâchoires (5) dans une tendance fermée sont disposés sur un côté gauche et un côté droit du boîtier (1);
après que chaque mâchoire (5) ait avancé vers chaque surface de butée (22) avec le deuxième cadre (3) et chaque premier crochet (52) touchant la surface de butée (22) correspondante, le deuxième cadre (3) continue à avancer, et le deuxième crochet (31) avance par rapport au trou de guidage (53), et l'élément élastique (6) agit sur la mâchoire (5);
lorsque le deuxième cadre (3) se déplace vers l'avant par rapport à la surface latérale avant (311) du deuxième crochet (31) et entre en contact avec la surface intérieure de l'extrémité avant (531) du trou de guidage (53), le deuxième cadre (3) continue à se déplacer vers l'avant, et le premier contact forcera les deux mâchoires (5) à se déplacer vers l'extérieur afin de faire ouvrir les deux mâchoires (5) et d'offrir un espace pour la capsule de boisson (4);
lorsque le deuxième cadre (3) se déplace vers l'arrière vers la surface latérale arrière (312) du deuxième crochet (31) et entre en contact avec la surface intérieure de l'extrémité arrière (532) du trou de guidage (53), l'élément élastique (6) agit sur la mâchoire (5), de sorte que le bord circulaire (41) de la capsule (4) se trouve à l'intérieur du premier crochet (52) après que les deux mâchoires (5) soient totalement fermées; et
pendant la poursuite du mouvement vers l'arrière du deuxième cadre (3), le deuxième contact force les mâchoires (5) à se déplacer vers l'arrière, de manière à faire en sorte que les mâchoires (5) soient entraînées à se déplacer vers l'arrière avec le deuxième cadre (3), et en même temps, le premier crochet (52) qui accroche le bord circulaire (41) de la capsule (4) tire la capsule (4) pour qu'elle quitte la chambre (21).

2. Le mécanisme de distribution et de rejet de capsule selon la revendication 1, **caractérisé en ce que** la surface extérieure avant (521) du premier crochet (52) est une surface incurvée.

3. Le mécanisme de distribution et de rejet de capsule selon la revendication 1 ou 2, **caractérisé en ce que**, les surfaces de contact et du premier contact et du deuxième contact sont inclinées, et la surface intérieure d'extrémité avant (531) et la surface intérieure d'extrémité arrière (532) du trou de guidage (53) sont des pentes ou des surfaces cambrées qui sont progressivement inclinées vers l'extérieur d'avant en arrière, la surface latérale avant (311) du deuxième crochet (31) est une surface cambrée, la surface latérale arrière (312) du deuxième crochet (31) est une pente ou une surface cambrée qui est progressivement inclinée vers l'extérieur d'avant en arrière, et une surface incurvée (511) permettant au deuxième crochet (31) de passer à travers est formée sur la partie de pince (51).

4. Le mécanisme de distribution et de rejet de capsule selon l'une des revendications 1-3, **caractérisé en ce que** les deux éléments élastiques (6) sont des ressorts à lames, une extrémité de chacun des ressorts à lames est fixée au boîtier (1), et des fentes (54) sont disposées sur les surfaces extérieures des mâchoires (5) pour résister aux extrémités élastiques des ressorts à lames.

5. Le mécanisme de distribution et de rejet de capsule selon l'une des revendications 1 à 4, **caractérisé en ce que** des structures de boucle élastique détachables sont disposées entre les extrémités arrière des mâchoires (5) et le boîtier (1); dans un état de chargement de la capsule où le premier cadre (2) et le deuxième cadre (3) sont complètement ouverts, les extrémités arrière des mâchoires (5) sont reliées de manière détachable au boîtier (1) par les structures de boucle élastique.

6. Le mécanisme de distribution et de rejet de capsule selon la revendication 5, **caractérisé en ce que** les structures de boucle élastique comprennent deux goupilles de serrage élastiques (55) qui sont disposées à la partie arrière des mâchoires (5) et agencées vers le haut et vers le bas à intervalles dans une direction de hauteur des mâchoires (5), des parties de serrage en saillie (551) sont disposées aux extrémités des goupilles de serrage élastiques (55), des épaulements d'arrêt (14) équipés des parties de serrage (551) sont disposés dans la partie arrière du boîtier (1), et les surfaces d'extrémité (552) des parties de serrage (551) en contact avec les épaulements d'arrêt (14) sont en pente.

7. Le mécanisme de distribution et de rejet de capsule selon l'une des revendications 1-6, **caractérisé en ce que**, le boîtier (1) et le premier cadre (2) sont moulés par injection d'un seul tenant formant une pièce moulée par injection d'un seul tenant ayant un passage axial (13), et le deuxième cadre (3) est situé à l'arrière du passage (13), le deuxième cadre (3) a deux bandes de limitation (32) faisant saillie vers l'extérieur respectivement disposées sur chacun des côtés gauche et droit du deuxième cadre (3),
de même, le boîtier (1) comporte deux rainures de guidage (15) disposées respectivement sur chacun des côtés gauche et droit de l'arrière du passage (13) pour recevoir et guider les bandes de limitation (32).

8. Le mécanisme de distribution et de rejet de capsule selon la revendication 7, **caractérisé en ce que**, chaque mâchoire (5) est limitée entre la bande de limitation (32) et le fond des rainures de guidage (15), chaque rainure de guidage (15) a une partie avant et une partie arrière, la surface inférieure de la partie arrière (151) de la rainure de guidage (15) est plate, et la surface inférieure de la partie avant (152) de la rainure de guidage (15) est une pente qui est inclinée vers l'extérieur de la partie arrière vers la partie avant du boîtier (1); chaque bande de limitation (32) comporte une partie avant et une partie arrière, la surface extérieure de la partie avant (321) de chaque bande de limitation (32) est plane, et la surface extérieure de la partie arrière (322) de chaque bande de limitation (32) est inclinée vers l'intérieur de la partie avant vers la partie arrière du boîtier (1).

9. Le mécanisme de distribution et de rejet de capsules selon la revendication 7, **caractérisé en ce que** des fentes de guidage (323) sont formées sur les surfaces extérieures des bandes de limitation (32) dans le sens de la longueur, les mâchoires (5) sont insérées dans les fentes de guidage (323) par des goupilles d'entraînement (7) sur les mâchoires (5), et les goupilles d'entraînement (7) peuvent coulisser le long des fentes de guidage (323).

10. Le mécanisme de distribution et de rejet de capsule selon la revendication 7, **caractérisé en ce que** des bandes de friction (8) en matériau flexible sont fixées sur les surfaces extérieures des mâchoires (5), les broches d'entraînement sont en matériau flexible, et la surface extérieure de chaque broche d'entraînement (7) est exposée à l'extérieur de chaque mâchoire (5) et entre en contact avec la surface inférieure de la partie arrière (151) de chaque rainure de guidage (15).
